(19) Europäisches Patentamt
European Patent Office
Office européen des brevets

(11) Publication number: **0 073 760**
**B1**

# (12) EUROPEAN PATENT SPECIFICATION

(45) Date of publication of patent specification: **21.08.85**

(51) Int. Cl.4: **A 01 N 33/12**

(21) Application number: **81901742.7**

(22) Date of filing: **09.03.81**

(86) International application number:
**PCT/US81/00288**

(87) International publication number:
**WO 82/02998 16.09.82 Gazette 82/22**

## (54) METHOD FOR IMPROVING WATER USE EFFICIENCY AND INCREASING RATE OF PHOTOSYNTHESIS IN CERTAIN CROP PLANTS.

(43) Date of publication of application:
**16.03.83 Bulletin 83/11**

(45) Publication of the grant of the patent:
**21.08.85 Bulletin 85/34**

(84) Designated Contracting States:
**AT CH DE FR LI NL SE**

(56) References cited:
**AU-A- 517 504**
**GB-A- 924 146**
**US-A-2 689 789**
**US-A-3 037 910**
**US-A-3 156 554**
**US-A-3 218 356**
**US-A-3 671 219**
**US-A-3 850 611**
**US-A-3 923 495**

**The file contains technical information submitted after the application was filed and not included in this specification**

(73) Proprietor: **THE DOW CHEMICAL COMPANY**
**Dow Center 2030 Abbott Road Post Office Box 1967**
**Midland Michigan 48640 (US)**

(72) Inventor: **HOLMSEN, Theodore Waage**
**20 Mount Scott Court**
**Clayton, CA 94517 (US)**

(74) Representative: **Allard, Susan Joyce et al**
**BOULT, WADE & TENNANT 27 Furnival street**
**London EC4A 1PQ (GB)**

(56) References cited:
**Chemical Abstracts, vol. 93, no. 9, issued Septembre 1. 1980, (Columbus, Ohio), published 18 November 1979, Dunbar et al., "Substituted benzyltrialkyl-ammonium salts and their use as plant growth regulatory agents" abstract no. 94967r**

**EP 0 073 760 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

(56) References cited:
Chemical Abstracts, vol. 87, no. 17, issued October 24, 1977 (Columbus, Ohio, USA), Farrahi-Aschtiani et al., "Studies on plant growth regulating substances XLVI. The effects of 4-chlorobenzyltributylammonium bromide (B4) on the growth of seedlings of Phaseolus vulgaris", abstract no. 128663g

Chemical Abstracts, vol. 87, no. 11, issued September 12, 1977, (Columbus, Ohio, USA9, Lucas et al., "The effect of a growth retardent compound (B4) on Phaseolus beans", abstract no. 79575u

Chemical Abstracts, vol. 71, no. 5, issued August 5, 1969, (Columbus, Ohio, USA), Knight et al., "Plant growth regulating substances. XXIX. Plant growth retarding properties of certain ammonium, phosphonium and sulfonium halides", abstract no. 21086p

Chemical Abstracts, vol. 77, no. 20, issued November 20, 1972, (Columbus, Ohio, USA), Moshin et al., "Influence of some growth retardents on the growth and mineral composition of plants", abstract no. 136164d

**Description**

An active area of agricultural research is devoted to the production of more productive plant life, particularly that plant life associated with food sources for man. In this research much effort has been expended in developing means for the regulation of the growth pattern of plant life, particularly as evidenced by the retardation of growth and the enhancement of maturation.

These objectives have been accomplished, in part, by the development and distribution of various chemical agents which alter or modify the growth characteristics of plants.

In Canadian Patent 1,090,799 and Australian Patent No. 517504 certain substituted benzyltrialkylammonium salts are described and their use as plant growth regulatory control agents. These compounds are described as active in causing a reduction or stunting of the linear growth of various plants such as soybeans, silver maple, eucalyptus, black oak, Arizona cypress and sweet gum.

It has now been found that water use efficiency can be improved, the rate of photosynthesis can be increased and yields of crop plants selected from cotton, sunflower, tobacco, potato, sugar beet, tomato, rape, deciduous fruit, citrus fruit, tea, coffee, olives, pineapple, cocoa, banana, sugar cane, rice and oil palm can be increased by applying to the plant or plant parts from 0.002 to 5.6 kg/ha (0.002 to 5 lbs/acre) of at least one compound having the formula:

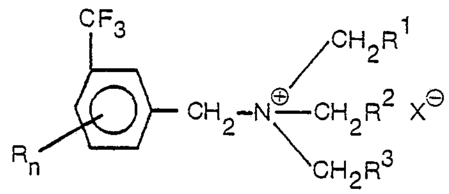

wherein R represents chloro, bromo or trifluoromethyl; n is 0 or the integer 1 or 2, with the proviso that when R is trifluoromethyl, n is 1; $R^1$, $R^2$ and $R^3$ each independently represent ethyl, n-propyl, n-butyl or isobutyl and X represents a non-phytotoxic anion.

The preferred compounds to employ in the practice of the present invention are those wherein n is 0 or 1, R is Cl, $R^1$, $R^2$ and $R^3$ are ethyl, n-propyl or n-butyl and X is Cl. The most preferred compound is tri-n-butyl-(3-(trifluoromethyl)benzyl)ammonium chloride.

The specific anion of the compounds of the present invention is not critical. The anion can be any of the anions conventionally employed in plant growth regulators. The only limitation upon the anion chosen is that it be non-phytotoxic to the plants being treated. Representative anions include $Cl^{(-)}$, $Br^{(-)}$, $I^{(-)}$, $SCN^{(-)}$, $CH_3CO_2^{(-)}$, $C_2H_5CO_2^{(-)}$, $\phi SO_3^{(-)}$, $\phi CO_2^{(-)}$, $Cl\text{-}\phi\text{-}O^{(-)}$, $C_3H_7CO_2^{(-)}$, $SO_4^{(=)}$, $PO_4^{(\equiv)}$, $NO_3^{-)}$, $CLO_3^{(-)}$ and $N^{(-)}$.

The exposure of viable plants and plant parts to the action of an effective amount of the compounds employed in the present invention is essential and critical for the practice of the present invention. The exact dosage to be employed is not the same for all plants and is dependent upon the response desired in the plant as well as such other factors as the plant species and the stage of growth at which treatment is made, and climatic conditions such as temperature, wind and especially rainfall.

In foliar treatments good results are obtained when from 0.002—5.6 kg/ha (0.002 to 5 pounds per acre) preferably 0.01—2.2 kg/ha (0.01 to 2 pounds per acre) of the compounds are applied.

The method of the present invention can be practiced by distributing the unmodified compounds upon the surfaces of the above-ground portion of plants. However, the present method also embraces the similar employment of liquid or dust compositions containing the compounds. In such usages, the compounds can be modified with one or a plurality of additaments or adjuvants including water or other liquid carriers, surface-active dispersing agents, and finely divided solids. Depending upon the concentration of the compounds, such augmented compositions are adapted to be distributed upon the above-ground surfaces of plants, or to be employed as concentrates and subsequently diluted with additional inert carrier to produce the ultimate treating compositions. In compositions where the adjuvant or helper is a finely divided solid, a surface-active agent or the combination of a surface-active agent and a finely divided solid, and/or a liquid additament, the adjuvant and/or adjuvants cooperate with the compounds so as to facilitate the invention and obtain an improved and outstanding result.

The exact concentration of the compounds to be employed in the treating compositions is not critical and may vary considerably provided the required dosage of the compounds is supplied upon the plant foliage. The concentration of the compound in liquid compositions employed to supply the desired dosage generally is from about 0.001 to 50 percent by weight although concentrations as low as 0.0001 percent and as high as 90 percent by weight are sometimes advantageously employed. In dusts, the concentration of active ingredient is from about 0.1 to 90 percent by weight and usually not in excess of about 20 percent. In both liquid and dust compositions to be employed as concentrates, the compounds can be present in a concentration of from 5 to 98 percent by weight.

The quantity of treating compositions to be applied can vary considerably provided that the required dosage of the compound or active ingredient is applied in a sufficient amount of the finished composition to cover adequately the vegetation to be treated. In the treatment of seedlings, good coverage is obtained when using from 94—564 l (10 to 60 gallons) of finished spray composition per hectare (acre). Where large

vegetation is concerned, it is frequently desirable to employ up to 5640 l (600 gallons) of the finished spray composition per hectare (acre) to assure complete coverage of the above-ground portion of the vegetation. In the application of dusts to plant foliage, good results are obtained with from 44.8—2240 kg (40 to 2,000 pounds) of finished dust per hectare (acre), the only requirement being that the required active ingredient dosage be supplied in sufficient dust to achieve good coverage of the foliage.

Liquid compositions containing the desired amount of active ingredient can be prepared by dispersing the compounds in water or in organic liquid, with or without the aid of a suitable surface-active dispersing agent such as an ionic or non-ionic emulsifying agent. Suitable organic liquid carriers include the agricultural spray oils and the petroleum distillates such as diesel fuel, kerosene, fuel oil, and naphthas. The organic liquid compositions can contain a small amount of water as a solvent for the active ingredient. In such compositions, the carrier comprises an emulsion, namely, a mixture of water, emulsifying agent, and organic liquid. In the liquid compositions, the choice of dispersing and emulsifying agent and the amount thereof employed is dictated by the nature of the composition and by the ability of the agent to facilitate the dispersion of the compounds in the carrier to produce the desired composition or to facilitate the wetting of surfaces upon which the compositions are applied. Dispersing and emulsifying agents which can be employed in the compositions include the condensation products of alkylene oxides with phenols and organic acids, alkyl aryl sulfonates, polyoxyalkylene derivatives of sorbitan esters, complex ether alcohols and mahogany soaps.

In the preparation of dust compositions, the active ingredient is dispersed in and on a finely divided solid such as clay, talc, chalk, gypsum, sugar, salt, bicarbonate and fertilizer. In such operations, the finely divided carrier is mechanically mixed or ground with the compounds. Similarly, dust compositions containing the compounds can be prepared from various of the solid surface-active dispersing agents such as bentonite, fuller's earth, attapulgite, and other clays. Depending upon the proportion of ingredients, these dust compositions can be employed as concentrates and subsequently diluted with additional solid surface-active dispersing agent or with chalk, talc or gypsum, sugar, salt and fertilizer, to obtain the desired amount of active ingredient in a composition adapted to be employed for the modification of the growth of plants. Also such dust compositions can be dispersed in water with or without the aid of a dispersing agent to form spray mixtures.

The expression "surface-active dispersing agent" as herein employed is intended to include all agents which are capable of acting at the interfacial surface as the dispersion medium. Thus, the term is inclusive of the solid emulsifying agents such as finely divided aluminum hydroxide, finely divided bentonite, fuller's earth, attapulgite, or other clays, as well as the ionic and non-ionic wetting and emulsifying agents such as the alkaline earth metal caseinates, alkyl aryl sulfonates, sulfonated oils, complex organic ester derivatives or complex ether alcohols.

The finely divided inert solid or carrier as herein described refers to materials which are incapable of facilitating dispersion, but which serve as a distribution medium for the active compounds. They include finely divided materials such as chalk, talc, gypsum, sugar, salt, bicarbonate, or fertilizers.

The following examples further illustrate the present invention.

## Example I

Tests were conducted to determine the effectiveness of tri-n-butyl-(3-(trifluoromethyl)benzyl)-ammonium chloride in reducing the water uptake of sugar beets and in finding the optimum chemical concentration to achieve this result.

Sugar beets were grown in a greenhouse in pots containing a sandy soil. When the plants were 8 days old, they were sprayed to the point of run-off with various dilutions of aqueous solutions of tri-n-butyl-(3-(trifluoromethyl)benzyl)ammonium chloride. These solutions were prepared by dissolving a predetermined amount of the compound in a predetermined amount of water containing 0.1 percent of a wetting agent. Three weeks after treatment, the plants were removed from the sand they were growing in and the sand gently washed from the roots. The roots were then washed with dilute Hoaglands solution to remove any adhering sand. The plants were then placed with their roots in a 125 ml Ehrlenmeyer flask containing 100 ml of dilute Hoaglands solution. The flasks were wrapped and sealed with aluminum foil and then placed in a greenhouse. Forty-four hours later, the amount of nutrient uptake for each dosage rate was measured by comparing the volume of initial solution with the volume of solution remaining after 44 hours. The tops of the plants were cut off and the weights of the tops, the concentration of the test compound, the nutrient uptake and the ratio of the uptake to the weight of the plant tops (i.e. number of ml of nutrient taken up per gram of plant tops) are set forth below in Table I.

TABLE I

| Concentration of tri-n-butyl-(3-(trifluoromethyl)benzyl)-ammonium chloride in ppm | Fresh weight of sugar beet tops in gms per plant | Nutrient uptake in ml after 44 hours | Number of ml of nutrient uptake per gram of tops |
|---|---|---|---|
| 0.0 | 19.9 | 48.4 | 2.43 |
| 0.1 | 22.1 | 59.1 | 2.67 |
| 1.0 | 26.7 | 52.9 | 1.98 (a) |
| 10.0 | 25.8 | 71.9 | 2.79 |
| 100.0 | 19.6 | 63.0 | 3.22 |

(a) Optimum dosage to give greatest water use efficiency.

Example II

Individual plots of cotton plants growing in Egypt were individually sprayed during the flowering period with aqueous solutions of tri-n-butyl-(3-(trifluoromethyl)benzyl)ammonium chloride prepared by dissolving a predetermined amount of the compound in a predetermined amount of water containing 0.1 percent of a wetting agent (Triton X—100). The dosages were 95.2; 47.6 and 23.8 grams active ingredient/hectare. Untreated controls were maintained under the same conditions as the treated plots. There were four replications. Half of the plots were irrigated every 10th day and the other half were irrigated every 20th day. The cotton was hand harvested and the yield weighed with the following results:

| | 10 Day Irrigation | | 20 Day Irrigation | |
|---|---|---|---|---|
| Dosage | Kg/hectare | % Increase | Kg/hectare | % Increase |
| 95.2 | 2,828 | 27.2 | 2,581 | 46.5 |
| 47.6 | 2,552 | 14.8 | 2,493 | 41.5 |
| 23.8 | 2,457 | 10.5 | 2,105 | 19.4 |
| Control | 2,224 | — | 1,762 | — |

TRITON is a Registered Trade Mark.

Example III

Two field trials were carried out in Greece to determine the effect of various dose rates of tri-n-butyl-(3-(trifluoromethyl)benzyl)ammonium chloride, on cotton yield in irrigated and dry land. Both experimental sites were divided into small plots of four rows, 15 meters long arranged in a randomized complete block design replicated five times. Application was made at the beginning of blooming with a knapsack sprayer. The compound was applied as an aqueous solution containing 0.1 weight percent Triton X—100. Plots were examined 24 hours, 7, 14 and 21 days after spray. The compound was applied at 25, 50 and 100 g active ingredient per hectare doses. None of the treatments showed any phytotoxicity or unusual growth features, yield was estimated by hand picking the center two rows excluding one meter at the edge of the plot. The results were as follows:

| | Irrigated Cotton | | Dry Land Cotton | |
|---|---|---|---|---|
| Dosage | Kg/hectare | % Increase | Kg/hectare | % Increase |
| 100 | 2,259 | 9.7 | 1,338 | 6.9 |
| 50 | 2,186 | 6.2 | 1,274 | 1.8 |
| 25 | 2,163 | 5.1 | 1,300 | 3.9 |
| 0 | 2,059 | — | 1,251 | — |

**Claims**

1. A method for improving water use efficiency, increasing the rate of phytosynthesis and increasing yields in crop plants selected from cotton, sunflower, tobacco, potato, sugar beet, tomato, rape, deciduous fruit, citrus fruit, tea, coffee, olives, pineapple, cocoa, banana, sugar cane, rice and oil palm which comprises applying to the plant or plant parts from 0.002 to 5.6 kg/ha (0.002 to 5 lbs/acre) of at least one compound having the formula

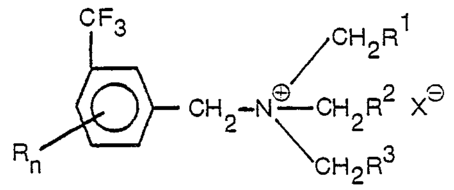

wherein R represents chloro, bromo or trifluoromethyl; n represents 0 or the integer 1 or 2, with the proviso that when R is trifluoromethyl, n is 1; $R^1$, $R^2$ and $R^3$ each independently represent ethyl, n-propyl, n-butyl or isobutyl and X represents a non-phytotoxic anion.

2. A method as claimed in claim 1 wherein the compound applied has the formula of claim 1 wherein n is 0 and $R^1$, $R^2$ and $R^3$ are each n-propyl.

3. A method as claimed in claim 2 wherein the crop is cotton.

4. A method as claimed in claim 2 wherein the crop is sugar beets.

5. A method as claimed in claim 2 wherein the crop is potatoes.

6. A method as claimed in claim 2 wherein the crop is rice.

7. A method as claimed in any one of the preceding claims wherein the compound is applied at the rate of 0.01 to 2.2 kg/ha (0.01 to 2 lbs/acre).

**Patentansprüche**

1. Verfahren zur Verbesserung der Wassernutzbarkeit, Vergrößerung der Geschwindigkeit der Fotosynthese und Steigerung des Ertrages von Feldfrüchten ausgewählt aus Baumwolle, Sonnenblumen, Tabak, Kartoffel, Zuckerrübe, Tomaten, Raps, Laubfrucht (deciduous fruit), Zitrusfrucht, Tee, Kaffee, Oliven, Ananas, Kakao, Bananen, Zuckerrohr, Reis und Ölpalme, dadurch gekennzeichnet, daß man auf die Pflanze oder Pflanzenteile 0,002 bis 5,6 kg/ha (0,002 bis 5 lbs/acre) von mindestens einer Verbindung der Formel

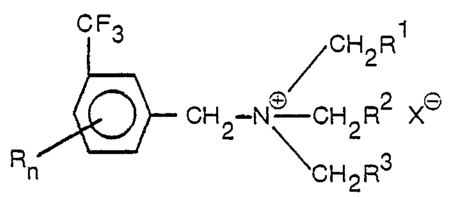

appliziert, worin R Chlor, Brom oder Trifluormethyl bedeutet; n 0 oder die ganze Zahl 1 oder 2 bedeutet, mit der Maßnahme, daß, wenn R Trifluormethyl ist, n 1 ist; $R^1$, $R^2$ und $R^3$ unabhängig voneinander Äthyl, n-Propyl, n-Butyl oder Isobutyl bedeuten und X ein nicht-phytotoxisches Anion bedeutet.

2. Verfahren nach Anspruch 1, dadurch gekennzeichnet, daß die applizierte Verbindung die Formel von Anspruch 1 besitzt, worin $n = 0$ und jeder der Reste $R^1$, $R^2$ und $R^3$ n-Propyl bedeutet.

3. Verfahren nach Anspruch 2, dadurch gekennzeichnet, daß die Feldfrucht Baumwolle ist.

4. Verfahren nach Anspruch 2, dadurch gekennzeichnet, daß die Feldfrucht Zuckerrübe ist.

5. Verfahren nach Anspruch 2, dadurch gekennzeichnet, daß die Feldfrucht Kartoffel ist.

6. Verfahren nach Anspruch 2, dadurch gekennzeichnet, daß die Feldfrucht Reis ist.

7. Verfahren nach einem der vorhergehenden Ansprüche, dadurch gekennzeichnet, daß die Verbindung mit einer Dosierung von 0,01 bis 2,2 kg/ha (0,01 bis 2 lbs/acre) appliziert wird.

**Revendications**

1. Procédé pour améliorer le rendement de l'utilisation de l'eau, augmenter la vitesse de photosynthèse et augmenter les rendements de plants de culture choisis parmi le coton, le tournesel, le tabac, les pommes de terre, la betterave sucrière, les tomates, le colza, les fruits caducs, les agrumes, le thé, le café, les olives, l'ananas, le cacao, les bananes, la cane à sucre, le riz et le palmier à huile, qui consiste à appliquer aux plants ou à des parties de plant de 0,002 à 5,6 kg/ha (0,002 à 5 livres/acre) d'au moins un composé de formule:

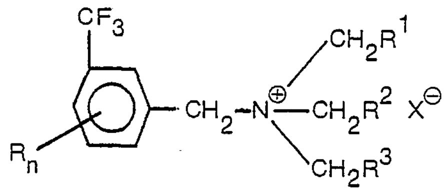

dans laquelle R représente un groupe chloro, bromo ou trifluorométhyle; *n* est 0 ou le nombre entier 1 ou 2, à la condition que lorsque R est le groupe trifluorométhyle, *n* soit 1; $R^1$, $R^2$ et $R^3$ représentent chacun indépendamment un radical éthyle, n-propyle, n-propyle, n-butyle ou isobutyle; et X représente un anion non phytotoxique.

2. Procéde selon la revendication 1, dans lequel le composé appliqué répond à la formule de la revendication 1 dans laquelle *n* est 0, et $R^1$, $R^2$ et $R^3$ représentent chacun un radical n-propyle.

3. Procédé selon la revendication 2, dans lequel la culture est du coton.

4. Procédé selon la revendication 2, dans lequel la culture est la betterave sucrière.

5. Procédé selon la revendication 2, dans lequel la culture est la pomme de terre.

6. Procédé selon la revendication 2, dans lequel la culture est le riz.

7. Procédé selon l'une quelconque des revendications précédentes, dans lequel on applique le composé à raison de 0,01 à 2,2 kg/ha (0,01 à 2 livres/acre).